Europäisches Patentamt

European Patent Office

Office européen des brevets

(11) Publication number: **0 234 135**
**B1**

# EUROPEAN PATENT SPECIFICATION

(45) Date of publication of the patent specification:
09.05.90

(51) Int. Cl.⁵: **F16H 47/04**

(21) Application number: **86400388.4**

(22) Date of filing: **24.02.86**

(54) Hydromechanical transmission.

(43) Date of publication of application:
**02.09.87 Bulletin 87/36**

(45) Publication of the grant of the patent:
**09.05.90 Bulletin 90/19**

(84) Designated Contracting States:
**DE FR GB IT**

(56) References cited:
**BE-A- 703 489**
**DE-C- 1 124 369**
**GB-A- 1 174 778**
**US-A- 3 988 949**

(73) Proprietor: **SHIMADZU CORPORATION, 378, Ichinofunairi-cho Kawaramachi-dori Nijo Sagaru, Nakagyo-ku Kyoto 604(JP)**

(72) Inventor: **Kita, Yasuo, 62-39, Ohtsuka Motoyashiki-cho, Yamashina-ku Kyoto 607(JP)**
Inventor: **Yoshihiko, Nakakoji, 10-4, Oiwake-cho, Otsu-shi, Shiga 520(JP)**

(74) Representative: **Rodhain, Claude et al, Cabinet Claude Rodhain 30, rue la Boétie, F-75008 Paris(FR)**

## Description

The present invention relates to a hydromechanical transmission which can be used in various industrial fields as an efficient continuously variable transmission.

A hydrostatic power transmission which uses hydraulic pump/motors (reversible hydraulic machines) and is employed as a continuously variable transmission is well known in the art. This transmission presents the advantage of enabling the output speed to be continuously varied. However, its efficiency is not always high. Moreover, the range of speeds it allows to attain is not satisfactorily wide. Accordingly, in an attempt to overcome these limitations, various hydromechanical transmissions (HMT) were further developed and published in the prior art in which such a hydrostatic power transmission (HST) is used in conjuction with a differential gear. The transmission of power is shared in both the HST and the differential gear so as to simultaneously attain a high transmission efficiency of the gearing as well as the continuous variability of the HST: see Chieo Ishihara: "Hydrodynamic Engineering," Asaka-shobo, Japan, and Sadao Ishihara "Theory and Practice of Piston Pump Motor," Corona-sha, Japan.

Besides, by US Patent 3 988 949, also is known a hydromechanical transmission which comprises: a differential mechanism having first, second, third input/output ends for forming either a first low-speed mechanical transmission line between the first and second input/output ends or a second high-speed mechanical transmission line between the first and third input/output ends, a hydraulic power transmission mechanism comprising a pair of hydraulic pump/moters, one of which acting as a hydraulic pump when the other acts as a hydraulic motor and vice versa, the input/output shaft of one of the pump/motors being connnected to the second input/output end of the differential mechanism, while the input/output shaft of the other pump/motor is connected to the third input/output end, both pump/motors cooperating to constitute continuous variable hydraulic power transmission lines, and a mode selection mechanism for selecting either a low-speed mode, in which the transmission output is connected to the transmission input via the first mechanical transmission line, or a high-speed mode, in which said output is connected to said input via the second mechanical transmission line.

Moreover, from DE-C 1 124 369, is known a split-torque transmission comprising a hydraulic pump and a hydraulic motor both of the variable displacement type and forming a hydraulic transmission path used in conjunction with a differential mechanism; as, when this transmission is running at high speed, the rotational speed of the hydraulic pump is reduced and the output from this pump hardly contribute to the output power, and to minimize the energy loss in the hydraulic path deteriorating the efficiency of the whole system, a locking mechanism for locking the shaft of said pump is provided. This locking mechanism, mounted on the pump body on the transmission line between the pump and the transmission assembly, and which is not prepared for shifts to high speed/low speed modes, is prepared more specifically for only the high speed modes.

In addition, the present inventor and others have developed a simple HMT (see co-pending application EP-A 0 235 466) as shown in Fig. 3. This HMT and the conventional HMT are designed so as to control the displacements of a hydraulic pump/motor and to switch the transmission between low-speed and high-speed modes, for attaining high efficiency over broad ranges of speeds. However, these HMTs suffer from deterioration in efficiency in the high-speed mode as described later.

It is an object of the present invention to provide a hydromechanical transmission which is equipped with a mode selection mechanism as mentioned above and also with a simple mechanism that can prevent with certainty the efficiency from deteriorating in the high-speed mode.

It is another object of the invention to provide a hydromechanical transmission which presents its hydraulic pump/motors from being undesirably rotated at high speeds in the high-speed mode, thereby solving various problems including a decrease in the working life of the machine and generation of heat and noise.

These objects are achieved in accordance with the teachings of the invention by a hydromechanical transmission comprising: a differential mechanism having first, second, third input/output ends, enabling forming either a first low-speed mechanical transmission line between the first and second input/output ends or a second high speed mechanical transmission line between the first and third input/output ends; a hydraulic power transmission mechanism constituted of two reversible hydraulic pump/motors, one of which acting as a hydraulic pump when the other acts as a hydraulic motor and vice versa, the input/output shaft of one of the pump/motors being connected to the second input/output end of the differential mechanism while the input/output shaft of the other pump/motors is connected to the third input/output end, both pump/motors cooperating to constitute continuously variable speed hydraulic power transmission lines; a mode selection mechanism for selecting either a low-speed mode, in which the transmission output is connected to the transmission input via the first mechanical transmission line, or a high-speed mode, in which said output is connected to said input via the second mechanical transmission line; characterized in that: it further comprises a locking mechanism for locking the input/output shaft of one of said pump/motor when rotating at low speed as the output speed of the transmission steps beyond a given high speed in the high speed mode, said locking mechanism being interposed between a gear included in said low speed mechanical transmission line for the input/output shaft, and said pump/motor; and in that the input/output shafts are each other juxtaposed on the same side of two pump/motor units, the differential mechanism is disposed in the same space for the input/output shafts and one input/output shaft from a first pump/motor is directly connected to a sun gear of the differential mechanism, while the other pump/motor is connected to a ring gear via a gear line, an engine torque is transmitted to planetary gears by a shaft which is disposed in alignment to the shaft of the first pump/motor and concentric thereto mounted is the high speed gear which belongs to the gear line to connect the second pump/motor with the ring gear of the differential mechanism wherein the low speed gear and the high speed gear are disposed in parallel, and a low-speed gear and high-speed gear are respectively engaged to gears the torque of which outputs to the shaft via clutches.

The second object mentioned hereabove is achieved by the addition of a clutch mechanism to the hydromechanical transmission described just above, said clutch mechanism acting to disconnect the input/output shaft of the pump/motor operating at high speed from the differential mechanism when the locking mechanism is in operation.

In the low-speed mode, the output is connected to the input via the first low speed mechanical transmission line, said line being formed between the first and second input/output ends of the differential mechanism. A portion of the power applied is delivered through this line. The remaining power is transmitted to the output via the hydraulic power transmission line formed by the hydraulic power transmission mechanism. In this case, one of the two devices acts as a motor, while the other acts as a pump.

In the high-speed mode, the output is connected to the input via the second high speed mechanical transmission line, said line being formed between the first and third input/output ends of the differential mechanism. A portion of the power applied is delivered through this mechanical transmission line. The remaining power is transmitted to the output via the hydraulic power transmission line formed by the hydraulic power transmission mechanism. At this time, the roles of both the hydraulic pump/motors are interchanged. When the high-speed mode is selected and the locking mechanism is operated for a given range of high speeds, the input/output shaft of the device acting as a pump is locked, and the totality of the power applied is delivered through the mechanical transmission line. Thus, the operation of the hydraulic power transmission mechanism completely stops . In this case, if the clutch mechanism is switched to its non-transmission position where the input/output shaft of the pump/motor operating at high speed is mechanically disconnected from the differential mechanism, this device is therefore prevented from running idle with a high speed.

Other objects and features of the invention will appear in the course of the description that follows, corresponding to the drawings in which:

- Fig. 1 is a flow line diagram of a hydromechanical transmission according to the invention;
- Fig. 2 is a graph for illustrating the operation of the transmission shown in Fig. 1; and
- Fig. 3 if a flow line diagram for illustrating the technology shown in the co-pending application EP-A 0 235 466.

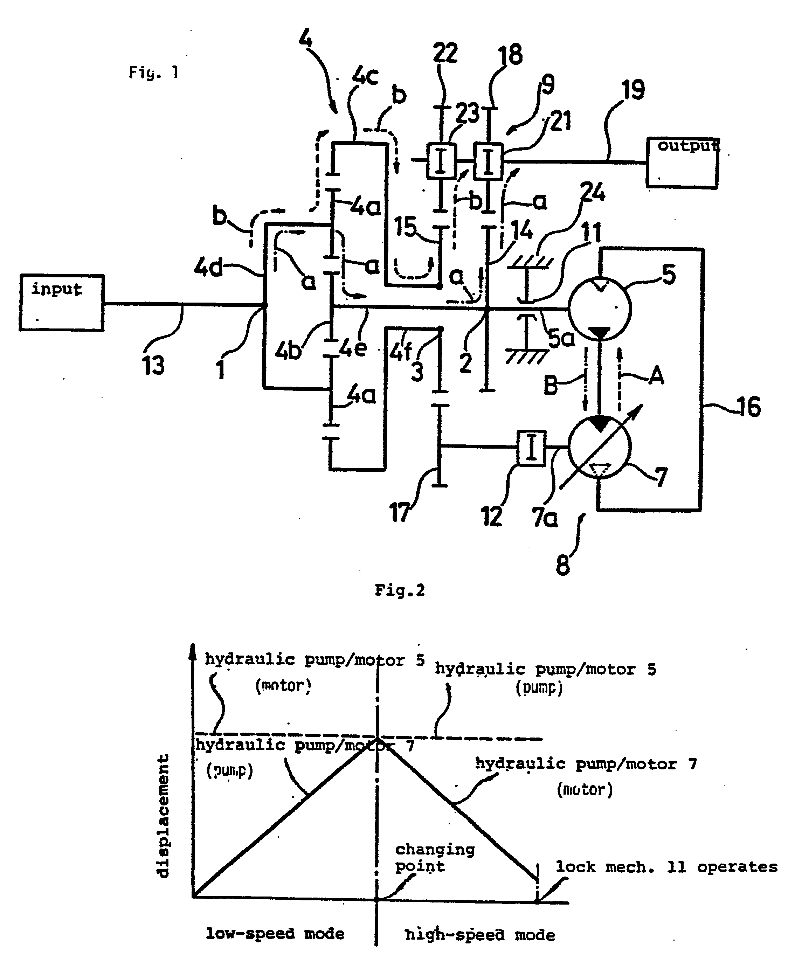

A hydromechanical transmission according to the invention is schematically shown in Fig. 1. This transmission comprises a differential mechanism 4, a hydraulic power transmission mechanism 8, a mode selection mechanism 9, a locking mechanism 11, and a clutch mechanism 12. The differential mechanism 4 has first, second, third input/output ends 1, 2, 3, respectively, forming either a first low speed mechanical transmission line a between the first end 1 and the second end 2, or a second high speed mechanical transmission line b between the first end 1 and the third end 3. The hydraulic power transmission mechanism 8 is constituted of a fixed-displacement hydraulic pump/motor 5 and a variable-displacement hydraulic pump/motor 7. The input/output shaft 5a of the device 5 is connected to the second input/output end 2. The input/output shaft 7a of the device 7 is coupled to the third input/output end 3. The devices 5 and 7 cooperate to constitute continuously variable hydraulic transmission lines A and B. The mode selection mechanism 9 selects either a low-speed mode, in which the output is connected to the input via the first mechanical transmission line a, or a high-speed mode, in which the output is connected to the input via the second mechanical transmission line b. The locking mechanism 11 acts to lock the input/output shaft 5a of one 5 of said devices. When the locking mechanism 11 is in operation, the input/output shaft 7a of the other device 7 is disconnected from the differential mechanism 4 by means of the clutch mechanism 12.

The differential mechanism 4 is a planetary gear train consisting of planetary pinions 4a circumferentially regularly spaced apart from one another and a sun gear 4b. The planetary pinions 4a are in mesh with an outside ring gear 4c, and are mounted on a gear carrier 4d. The aforementioned first input/output end 1 is provided at the center of said carrier 4d. An input shaft 13 is mounted to the end 1. The sun gear 4b is mounted on a shaft 4e, which is used as the second input/output end 2. A gear 14 is tightly fixed to the second end 2. The ring gear 4c has a boss 4f that is used as the third input/output end 3. A gear 15 is coupled to the third end 3.

In the hydraulic power transmission mechanism 8, the fixed-displacement pump/motor 5 is connected in series with the variable-displacement pump/motor 7 through a hydraulic circuit 16, in the same manner as in an ordinary hydrostatic power transmission . The input/output shaft 5a of the pump/motor 5 is coupled to the shaft 4e of the sun gear 4b. The input/output shaft 7a of the pump/motor 7 is connected to the ring gear 4c by means of gear 17.

The mode selection mechanism 9 comprises a low speed clutch 21 inserted between a low speed gear 18 and the output shaft of the transmission, said output shaft being referenced by numeral 19. The gear 18 meshes with the gear 14 at the second input/output end 2. The mechanism 9 further comprises a high speed clutch 23 inserted between a high speed gear 22 and the output shaft 19 , said gear 22 engaging with the gear 15 at the third input/output end 3.

The locking mechanism 11 acts to lock the input/output shaft 5a of the pump/motor 5 when this device 5 is running at a relatively low speed in a given range of high output speeds in the high-speed mode, as described later. The mechanism 11 is so designed to be capable of connecting and disconnecting the input/output shaft 5a with a stationary member 24. According to a preferred embodiment, the locking mechanism is similar in structure to ordinary brake mechanisms.

Usually, the clutch mechanism 12 connects the input/output shaft 7a of the pump/motor 7 with the gear 17. It disconnects the shaft 7a from the gear 17 only upon receiving a corresponding switching instruction.

In this example, rotary power from an engine or the like is applied to the input shaft 13 mounted at the first input/output end 1 of the differential mechanism 4. Then, the rotary power is delivered by the output shaft 19 which is connected to the second input/output end 2 or to the third input/output end 3 of the differential mechanism 4 through the mode selector mechanism 9. The power is transmitted to the driving wheels of a vehicle or the like.

In the operation of the hydromechanical transmission constructed as described above, when the low-speed mode is selected, the low-speed clutch 21 is engaged but the high-speed clutch 23 is not engaged. Under this condition, the output is connected to the input through the low-speed mechanical transmission line a formed between the first end 1 and the second end 2 of the differential mechanism 4. Thus, a portion of the power applied is transmitted to the output shaft 19 through said mechanical transmission line a. At this time, the variable-displacement pump/motor 7 acts as a pump, while the fixed-displacement pump/motor 5 acts as a motor. Accordingly, the rotary power appearing at the third end 3 of the differential mechanism 4 is transmitted to the output shaft 19 via the hydraulic transmission line A that is formed between the variable-displacement pump/motor 7 and the fixed-displacement pump/motor 5. In this low-speed mode, as the displacement of the pump/motor 7 is increased, the rotational speed of the output shaft 19 increases relatively to the rotational speed of the input shaft 13. More specifically, when the displacement of the pump/motor 7 having a variable displacement is zero, the third input/output end 3 of the differential mechanism 4 substantially runs idle. Therefore, the output shaft 19 connected to the second input/output end 2 of the differential mechanism 4 is substantially at a standstill. Then, as the displacement of the pump/motor 7 increases the rotational speed at the third end 3 decreases, and the rotational speed at the second end 2 increases, until both these speeds are equal. In this state, the mode selection mechanism 9 is switched from the clutch 21 to the clutch 23, which means that the low-speed clutch 21 is disengaged, while the high-speed clutch 23 is engaged to select the high-speed mode.

In this high-speed mode, the mechanical transmission line b is formed between the first end 1 and the third end 3 of the differential mechanism 4. This allows a portion of the applied power to be transmitted to the output shaft 19 via this line b. At this time, the variable-displacement pump/motor 7 functions as a motor, while the fixed-displacement pump/motor 5 acts as a pump. Thus, the rotary power appearing at the second end 2 of the differential mechanism 4 is transmitted to the output shaft 19 via the hydraulic transmission line B being formed between the fixed-displacement pump/motor 5 and the variable-displacement pump/motor 7. In this high-speed mode, as the displacement of the pump/motor 7 is reduced, the rotational speed of the output shaft 19 increases relatively to the rotational speed of the input shaft 13. In other words, as the displacement of the pump/motor is reduced, the rotational speed at the third end 3 increases, while the rotational speed at the second end 2 decreases.

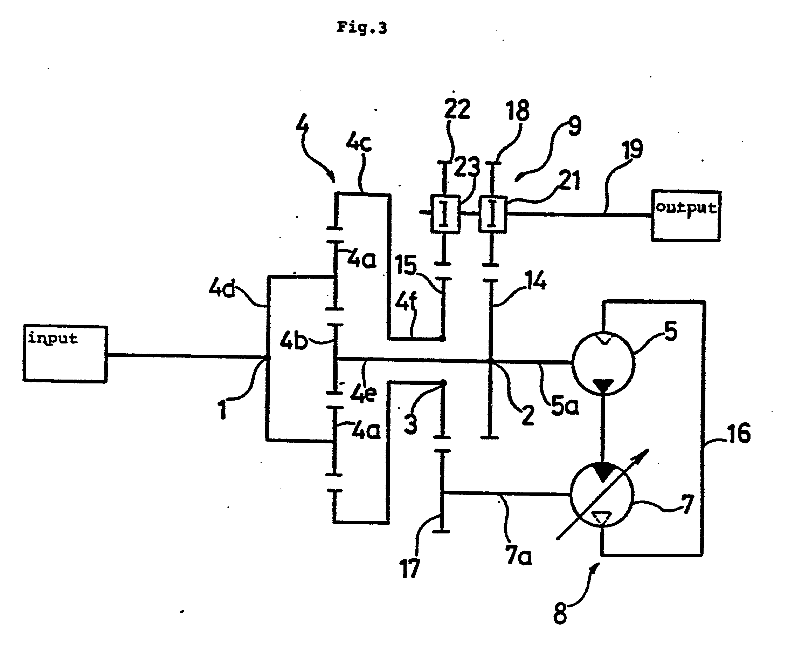

The principles of operation described thus far also apply to the conventional transmission shown in Fig. 3. It is to be noted that same components are indicated by same reference numerals in Figs. 1 and 3. Accordingly, these components will not be described again hereafter. As mentioned previously, the transmission shown in Fig. 3 has the problem of a deterioration in its efficiency in the high-speed mode. More specifically, in the high-speed mode, if the displacement of the pump/motor 7 is reduced, then the rotational speed of the output shaft 19 will increase relatively to the rotational speed of the input shaft 13 as mentioned already. In a range of high speeds where the speed of the output shaft 19 approaches its limit, the amount of fluid displaced by the fixed-displacement pump/motor 5 acting as a pump greatly decreases, whereas the variable-displacement pump/motor 7 acting as a motor runs at high speeds with low displacement. At this time, the output from the pump/motor 7 hardly contributes to the actual output of the transmission. In addition, the operation of the hydraulic transmission mechanism 8 causes energy loss, thus deteriorating the efficiency of the whole system.

In contrast, in the novel transmission shown in Fig. 1, the locking mechanism 11 is operated in the aforementioned range of high output speeds in the high-speed mode to lock the input/output shaft 5a of the fixed-displacement device 5. In addition, the clutch mechanism 12 is switched to its other state to disconnect the input/output shaft 7a of the variable-displacement pump/motor 7 from the differential mechanism 4. Therefore, the second input/output end 2 and the sun gear 4b of the differential mechanism 4 are maintained completely at rest. This allows all the power applied to the input shaft 13 to be directed to the output shaft 19 via the mechanical transmission line b formed between the first end 1 and the third end 3. Under this condition, the hydraulic transmission mechanism 8 comprising the hydraulic pump/motors 5 and 7 is fully disconnected from the differential mechanism 4. Consequently, power is transmitted only by means of the gears 4a, 4c, 15, 22. Hence, the system can be run with very high efficiency even at high velocities.

The mode selection mechanism 9, the locking mechanism 11, the clutch mechanism 12, etc. are switched from one state to another by the use of, for example, a control apparatus, such as a microcomputer, and an actuator or similar. The control apparatus detects the operating conditions and issues instructions for operating the actuators.

If the locking mechanism 11 is designed to be capable of operating in a second range of speeds, as well as in the aforementioned range, then this locking mechanism 11 may be used for a parking brake, or the like, for immobilizing the whole transmission.

It is to be noted that the invention as defined by the appended claim 1 embraces the embodiment shown in Fig. 1 except for the clutch mechanism. In this case, when the locking mechanism is actuated, the second input/output end 2 of the differential mechanism 4 is completely locked, and therefore the invention thus defined is not greatly inferior in advantage to the illustrated system. However, when the clutch mechanism 12 is provided as in the illustrated embodiment and is operated together with the locking mechanism 11 to separate the hydraulic pump/motor 7 from the differential mechanism 4, the pump/motor 7 is prevented from running idle to no avail. This can also prevent energy loss which would otherwise be caused by viscous resistance encountered during idle run. Since the pump/motor 7 does not run idle at high speeds, its durability does not deteriorate, nor does generation of heat and noise occur. If the clutch mechanism 12 constructed as described above is so designed as to be capable of operating in a second range of speeds as well as in the aforementioned range, the mechanism 12 can function also as a neutral clutch that completely disconnects the output from the input, and sets the transmission into neutral gear position.

Although the differential mechanism is not limited to a planetary gear train, the use of such a planetary gear train facilitates making the system compact. Also, the hydraulic transmission mechanism is not limited to the mechanism described above, of course, but various changes and modifications may be made thereto without departing from the scope of the claims. For example, both the pump/motors 5 and 7 may be of the variable displacement type.

Also, in the illustrated embodiment, the differential mechanism is disposed on the input side to divide the input power. The invention is not limited to this structure. For example, it is also applicable to a structure where the output power is divided.

Since the novel transmission is constructed as described thus far, it can be switched between the low-speed and high-speeds modes. Its efficiency at high speeds in the high-speed mode is improved as compared with the conventional transmission equipped with a mode selecting function. Additionally, the durability and reliability are enhanced, and noise is reduced. In this way, the novel hydromechanical transmission can run with high efficiency over a wide range of speeds.

**Claims**

1. A hydromechanical transmission comprising: a differential mechanism (4) having first, second, third input/output ends (1, 2, 3) enabling forming either a first low speed mechanical transmission line (a) between the first and second input/output ends or a second high speed mechanical transmission line (b) between the first and third input/output ends;

a hydraulic power transmission mechanism (8) constituted of two reversible hydraulic pump/motors (5, 7), one of which acting as a hydraulic pump when the other acts as a hydraulic motor and vice versa, the input/output shaft (5a) of one (5) of the pump/motors being connected to the second input/output end of the differential mechanism, while the input/output shaft (7a) of the other (7) is connected to the third input/output end, both pump/motors (5, 7) cooperating to constitute continuously variable speed hydraulic power transmission lines (A, B);

a mode selection mechanism (9) for selecting either a low-speed mode, in which the transmission output (19) is connected to the transmission input (13) via the first mechanical transmission line (a), or a high-speed mode, in which said output (19) is connected to said input (13) via the second mechanical transmission line (b);

characterized in that:

it further comprises a locking mechanism (11) for locking the input/output shaft (5a) of one of said pump/motor (5) when rotating at low speed as the output speed of the transmission steps beyond a given high speed of the high speed mode, said locking mechanism (11) being interposed between a gear (14) included in said low speed mechanical transmission line (a) for the input/output shaft, and said pump/motor (5); and in that:

the input/output shafts (5a, 7a) are each other juxtaposed on the same side of two pump/motor units (5, 7),

the differential mechanism (4) is disposed in the same space for the input/output shafts and one input/output shaft (5a) from a first pump/motor (5) is directly connected to a sun gear (4b) of the differential mechanism (4), while the other pump/motor (7) is connected to a ring gear (4c) via a gear line (15, 17),

an engine torque is transmitted to planetary gears (4a) by a shaft (13) which is disposed in alignment to the shaft (5a) of the first pump/motor (5) and concentric thereto mounted is the high speed gear (15) which belongs to the gear line (15, 17) to connect the second pump/motor (7) with the ring gear (4c) of the differential mechanism wherein the low speed gear (14) and the high speed gear (15) are disposed in parallel,

and a low-speed gear (14) and high-speed gear (15) are respectively engaged to gears (18, 22) the torque of which outputs to the shaft (19) via clutches.

2. A hydromechanical transmission according to claim 1, characterized in that it further comprises a clutch mechanism (12) acting to disconnect the input/output shaft (7a) of the pump/motor (7) operating at high speed from the differential mechanism (4) when said locking mechanism (11) is in operation.

3. A hydromechanical transmission as set forth in claim 1 or 2, characterized in that said locking mechanism brings the input/output shaft (5a) of said one pump/motor (5) connected to the second input/output end into and out of engagement with a stationary member.

4. A hydromechanical transmission as set forth in claim 2, characterized in that the clutch mechanism (12) is mounted between the third input/output end of the differential mechanism (4) and the input/output shaft (7a) of the pump/motor (7) connected to the third input/output end.

5. Utilization of a hydromechanical transmission as claimed in claim 1, characterized in that said locking means (11) is also used as a parking brake for completely immobilizing the transmission.

6. Utilization of a hydromechanical transmission as claimed in claim 2, characterized in that said clutch mechanism (12) is also used as a neutral clutch for putting the transmission into neutral gear position.

**Patentansprüche**

1. Hydromechanisches Getriebe, bestehend aus: einem Differentialmechanismus (4) mit ersten, zweiten, dritten Eingängen/Ausgängen (1, 2, 3), die entweder einen ersten mechanischen Übertragungsweg (1) geringer Geschwindigkeit zwischen den ersten und zweiten Eingängen/Ausgängen oder einen zweiten mechanischen Übertragungsweg (b) hoher Geschwindigkeit zwischen den ersten und dritten Eingängen/Ausgängen ermöglichen; einem hydraulischen Kraftübertragungsmechanismus (8) bestehend aus zwei reversiblen Hydraulikpumpen/-motoren (5, 7), wovon ein Teil als Hydraulikpumpe arbeitet, wenn der andere als Hydraulikmotor arbeitet und umgekehrt, wobei die Eingangs/Ausgangs-Welle (5a) eines der Teile (5) von Pumpe/Motor mit dem zweiten Eingang/Ausgang des Differentialmechanismus verbunden ist, während die Eingangs/Ausgangs-Welle (7a) des anderen Teils (7) mit dem dritten Eingang/Ausgang verbunden ist und Pumpe/Motor (5, 7) zur Bereitstellung hydraulischer Kraftübertragungswege (A, B) stufenlos veränderbarer Geschwindigkeit zusammenwirken; einem Mechanismus (9) zur Betriebswahl, um entweder eine Betriebsweise geringer Geschwindigkeit auszuwählen, in der der Übertragungsausgang (19) mit dem Übertragungseingang (13) über den ersten mechanischen Übertragungsweg (a) verbunden ist, oder eine Betriebsweise geringer Geschwindigkeit auszuwählen, in der der Ausgang (19) mit dem Eingang (13) über den zweiten mechanischen Übertragungsweg (b) verbunden ist, dadurch gekennzeichnet, daß außerdem ein Verriegelungsmechanismus (11) zur Verriegelung der Eingangs-/Ausgangs-Welle (5a) eines der Teile (5) von Pumpe/Motor bei niedriger Drehzahl für den Fall vorgesehen ist, daß die Ausgangsgeschwindigkeit des Getriebes unterhalb einer vorgegebenen Höchstgeschwindigkeit der Betriebsweise hoher Geschwindigkeit liegt, wobei der Verriegelungsmechanismus (11) zwischen einem sich in dem Übertragungsweg (a) geringer Geschwindigkeit für die Eingangs/Ausgangs-Welle angeordneten Zahnrad (14) und Pumpe/Motor (5) eingefügt ist; die Eingangs-/Ausgangs-Wellen (5a, 7a) nebeneinanderliegend auf der gleichen Seite der Pumpe/Motoreinheiten (5, 7) angeordnet sind, der Differentialmechanismus in gleichem Abstand zu den Eingangs-/Ausgangs-Wellen angeordnet ist und eine Eingangs-/Ausgangs-Welle (5a) einer ersten Pumpe/Motor (5) unmittelbar mit einem Sonnenrad (4b) des Differentialmechanismus (4) verbunden ist, während die andere Pumpe/Motor (7) mit einem Drehkranz (4c) über eine Zahnradverbindung (15, 17) verbunden ist, das Maschinendrehmoment über eine in Verlängerung zu der Welle (5a) der ersten Pumpe/Motor (5) angeordnete Welle (13) auf Planetenräder (4a) übertragen wird und konzentrisch hierzu das Zahnrad (15) hoher Geschwindigkeit befestigt ist, welches der Zahnradverbindung (15, 17) angehört und die zweite Pumpe/Motor (7) mit dem Drehkranz (4c) des Differentialmechanismus verbindet, in dem das Zahnrad (14) für niedrige Geschwindigkeit und das Zahnrad (15) für hohe Geschwindigkeit parallel angeordnet sind, und ein Zahnrad (14) für niedrige Geschwindigkeit und das Zahnrad (15) für hohe Geschwindigkeit mit entsprechenden Zahnrädern (18, 22) in Eingriff stehen, deren Drehmoment mittels Kupplungen auf die Welle (19) abgeführt wird.

2. Hydromechanisches Getriebe nach Anspruch 1, dadurch gekennzeichnet, daß außerdem ein Kupplungsmechanismus (12) vorgesehen ist, der die Eingangs-/Ausgangs-Welle (7a) der bei hoher Geschwindigkeit arbeitenden Pumpe/Motor (7) von dem Differentialmechanismus (4) trennt, sofern der Verriegelungsmechanismus (11) in Betrieb ist.

3. Hydromechanisches Getriebe nach Anspruch 1 oder 2, dadurch gekennzeichnet, daß der Verriegelungsmechanismus die mit dem zweiten Eingang/Ausgang verbundene Eingangs-/Ausgangs-Welle (5a) von Pumpe/Motor (5) in und außer Eingriff mit einem stationären Bauteil bringt.

4. Hydromechanisches Getriebe nach Anspruch 2, dadurch gekennzeichnet, daß der Kupplungsmechanismus (12) zwischen dem den dritten Eingang/Ausgang des Differentialmechanismus (4) bildenden Ende und der mit dem dritten Eingangs-/Ausgangs-Ende verbundenen Ausgangswelle (7a) von Pumpe/Motor (7) befestigt ist.

5. Verwendung eines hydraulischen Getriebes nach Anspruch 1, dadurch gekennzeichnet, daß das Verriegelungsmittel (11) außerdem als Parkbremse zum vollständigen Blockieren des Getriebes verwendet wird.

6. Verwendung eines hydraulischen Getriebes nach Anspruch 2, dadurch gekennzeichnet, daß der Kupplungsmechanismus (12) außerdem als Freilaufkupplung verwendet wird, um das Getriebe in eine neutrale Zahnradposition zu bringen.

**Revendications**

1. Transmission hydromécanique comportant: un mécanisme différentiel (4) ayant une première, une deuxième et une troisième extrémités d'entrée/sortie (1, 2, 3) permettant de former soit une première ligne de transmission mécanique basse vitesse (a) entre la première et la deuxième extrémités d'entrée/sortie, soit une deuxième ligne de transmission mécanique haute vitesse (b) entre la première et la troisième extrémités d'entrée/sortie,

un mécanisme de transmission de force motrice hydraulique (8) constitué de deux unités hydrauliques pompe/moteur réversibles (5, 7), l'une de ces unités agissant comme une pompe hydraulique quand l'autre agit comme un moteur hydraulique et vice versa, l'arbre d'entrée/sortie (5a) de l'une (5) des unités pompe/moteur étant raccordé à la deuxième extrémité d'entrée/sortie du mécanisme différentiel, tandis que l'arbre d'entrée/sortie (7a) de l'autre unité (7) est raccordé à la troisième extrémité d'entrée/sortie, les deux unités pompe/moteur (5, 7) coopérant pour constituer des lignes de transmission hydraulique de force motrice à vitesse variable de façon continue (A, B),

un mécanisme de sélection de mode (9) pour sélectionner soit un mode basse vitesse dans lequel la sortie de transmission (19) est reliée à l'entrée de transmission (13) par l'intermédiaire de la première ligne de transmission mécanique (a), soit un mode haute vitesse dans lequel ladite sortie (19) est reliée à ladite entrée (13) par l'intermédiaire de la deuxième ligne de transmission mécanique (b), caractérisé en ce:

— qu'elle comporte en outre un mécanisme de blocage (11) pour bloquer l'arbre d'entrée/sortie (5a) de l'une (5) desdites unités pompe/moteur quand elle tourne à faible vitesse tandis que la vitesse de sortie de la transmission s'élève au-delà d'une vitesse élevée donnée du mode haute vitesse, ledit mécanisme de blocage (11) étant intercalé entre une roue d'engrenage (14) comprise dans ladite ligne de transmission mécanique basse vitesse (a), pour l'arbre d'entrée/sortie, et ladite unité pompe/moteur (5), et en ce:

— que les arbres d'entrée/sortie (5a, 7a) sont juxtaposés l'un à l'autre du même côté des deux unités pompe/moteur (5, 7),

— que le mécanisme différentiel (4) est disposé dans le même espace que les arbres d'entrée/sortie et qu'un arbre d'entreé/sortie (5a) d'une première unité pompe/moteur (5) est directement relié à une roue solaire (4b) du mécanisme différentiel (4), tandis que l'autre unité pompe/moteur (7) est reliée à une couronne dentée (4c) par l'intermédiaire d'un train d'engrenages (15, 17),

— qu'un couple moteur est transmis à des roues d'engrenages satellites (4a) par un arbre (13) qui est disposé à l'alignement de l'arbre (5a) de la première unité pompe/moteur (5), la roue d'engrenage haute vitesse (15) qui appartient au train d'engrenages (15, 17) étant montée suivant cet axe d'alignement pour relier la deuxième unité pompe/moteur (7) à la couronne dentée (4c) du mécanisme différentiel, la roue d'engrenage basse vitesse (14) et la roue d'engrenage haute vitesse (15) étant alors disposées en parallèle,et

— que la roue d'engrenage basse vitesse (14) et la roue d'engrenage haute vitesse (15) engrènent respectivement avec des roues d'engrenages (18, 22), le couple de ces roues étant alors transmis à l'arbre (19) par l'intermédiaire d'embrayages.

2. Transmission hydromécanique selon la revendication 1, caractérisée en ce qu'elle comporte en outre un mécanisme d'embrayage (12) agissant pour séparer l'arbre d'entrée/sortie (7a) de l'unité pompe/moteur (7), fonctionnant à haute vitesse (7), du mécanisme différentiel (4) quand ledit mécanisme de blocage (11) est en fonctionnement.

3. Transmission hydromécanique selon la revendication 1 ou 2, caractérisée en ce que ledit mécanisme de blocage amène l'arbre d'entrée/sortie (5a) de ladite première unité pompe/moteur (5) raccordée à la deuxième extrémité d'entrée/sortie en prise et hors de prise avec un élément fixe.

4. Transmission hydromécanique selon la revendication 2, caractérisée en ce que le mécanisme d'embrayage (12) est monté entre la troisième extrémité d'entrée/sortie du mécanisme différentiel (4) et l'arbre d'entrée/sortie (7a) de l'unité pompe moteur (7) raccordée à la troisième extrémité d'entrée/sortie.

5. Utilisation d'une transmission hydromécanique selon la revendication 1, caractérisée en ce que ledit moyen de blocage (11) est aussi utilisé comme frein de stationnement pour immobiliser complètement la transmission.

6. Utilisation d'une transmission hydromécanique selon la revendication 2, caractérisée en ce que ledit mécanisme d'embrayage (13) est aussi utilisé comme embrayage de point mort pour mettre la transmission en position de point mort.

Fig. 1

Fig.2

Fig.3